# EUROPÄISCHE PATENTSCHRIFT

(11) **EP 2 718 084 B1**
(45) Veröffentlichungstag und Bekanntmachung des Hinweises auf die Patenterteilung: **22.04.2020**
(21) Anmeldenummer: 11738603.7
(22) Anmeldetag: 07.06.2011
(51) Int. Cl.: B29C 48/27, B29C 48/32, B29C 48/09, B29C 49/04, B29C 48/90, B29C 48/355

(54) **VERFAHREN UND VORRICHTUNG ZUR ABREINIGUNG EINES EXTRUSIONSKOPFS**
METHOD AND DEVICE FOR CLEANING AN EXTRUSION HEAD
PROCÉDÉ ET DISPOSITIF POUR LE NETTOYAGE D'UNE TÊTE D'EXTRUSION

(43) Veröffentlichungstag der Anmeldung: 16.04.2014
(73) Patentinhaber: Mauser-Werke GmbH, 50321 Brühl (DE)
(72) Erfinder: KEUSCH, Stefan, 50321 Brühl (DE); SCHÜLLER, Frank, 52391 Vettweiss-Gladbach (DE)
(74) Vertreter: Stamm, Sabine
(86) Internationale Anmeldenummer: PCT/EP2011/002781
(87) Internationale Veröffentlichungsnummer: WO 2012/167802

(56) Entgegenhaltungen:
- AU-B2- 690 478
- DE-U1-202010 007 275
- IE-B2- 72 482
- JP-A- 8 332 668
- JP-A- 2003 305 761
- US-A1- 2008 099 940

## Beschreibung

Die vorliegende Erfindung bezieht sich auf ein Verfahren und eine Vorrichtung zur Abreinigung von Extrusionsköpfen bei der Extrusion von thermoplastischen Kunststoffen, die aus einer ringförmigen Extrusionsdüse ausgestoßen (extrudiert) werden.

### Problematik:

Bei der Verarbeitung von thermoplastischen Kunststoffen wie Polyolefinen - vorwiegend bei mittel- und hochmolekularen Polyethylentypen wie z. B. HDPE beispielsweise beim Extrusionsblasformen, insbesondere bei kontinuierlicher Extrusion mit kontinuierlichem Schlauchaustritt, aber auch bei diskontinuierlichem Schlauchausstoß (Akkuköpfe) tritt folgender nachteiliger Effekt auf :
Beim Ausstoßen von schmelzflüssigem Kunststoff steht dieser innerhalb der Extrusionsvorrichtung (z. B. Extrusionskopf) unter hohem Druck. Nach Austritt aus der Extrusionsdüse entspannt sich der Kunststoff auf Atmosphärendruck und quillt dabei auf. Bei diesem Austrittsvorgang scheiden sich im Laufe der Zeit insbesondere bei kontinuierlicher Extrusion gelartige Produkte (Gleitmittel, Additive) aus dem heißen Kunststoffstrang aus und lagern sich als störende Materialanbackungen im Nahbereich der Düsenmündung und zwar hauptsächlich innenseitig auf dem Kern, aber auch auf dem außenseitigen Düsenmundstück ab. Bei ringförmigen Ausstoßdüsen besteht dabei das Problem, dass man diese Ablagerungen an dem innenseitigen Kern auch nicht sehen kann. Die Ablagerungen (Ausscheidungen) stammen von niedermolekularen Bestandteilen der Polymerschmelze (z. B. kurze Polymerketten, Additive, wachsartige Bestandteile), die sich beim Austritt der Schmelze aufgrund des plötzlichen Druckabfalls und des Abfalls der Wandschubspannungen an den Austrittskanten des Düsenkanals absetzen.

Die gelartigen Produkte unterliegen ständiger hoher Temperatureinwirkung und verharzen und verkoken in relativ kurzer Zeit. Dabei verspröden diese ständig wachsenden Ausscheidungen und brechen bzw. bröckeln unkontrolliert ab. Solche Krümel oder Brocken, die mehrere Zentimeter lang sein können, fallen in den extrudierten Schlauch und führen zu schadhaften Fertigprodukten (z. B. bei der Fassherstellung können undichte Bodenschweißnähte entstehen, wenn derartige poröse Verkokungspartikel in den Schweißnahtbereich gelangen.
Die Partikel können beispielsweise nur lose auf der Innenwand des erblasenen Fertigproduktes (z. B. einem Spundfass) anhaften/ankleben und beim Befüllen des Hohlkörpers mit dem eigentlichen Füllgut abbrechen und abfallen und so in dieses Füllgut gelangen und es verunreinigen.

Die Ablagerungen (gelartige Produkte, Anbackungen) haben zunächst eine niedrigviskose Konsistenz. Aufgrund der hohen Temperaturen von Düse und Kern und unter Einfluss von Sauerstoff aus der Umgebungsluft oxidieren die Ablagerungen aber im Laufe der Zeit und die Viskosität nimmt zu bis sich durch Verkokung schließlich erste feste Bereiche ausbilden.
Diese äußeren Ablagerungen an der Austrittsdüse wachsen unkontrollierbar an. Insbesondere bei der Blasformtechnik, bei der ein schlauchförmiger Vorformling aus einer Ringdüse ausgestoßen wird, kann insbesondere bei kontinuierlichem Schmelzeaustritt der innere Kernbereich der Austrittsdüse nicht eingesehen werden.
Die Ablagerungen werden von Zeit zu Zeit, wenn sie zu stark angewachsen und bröckelig geworden sind, durch die Innenseite des vorbeilaufenden Schmelzeschlauches mitgerissen und kleben sich auf der Innenoberfläche des zu fertigenden Produktes, z. B. einem Kunststoff-Spundfass an. Dies führt in nachteiliger Weise nach Befüllung des Fasses zu einer Kontamination des Füllgutes.
Bei einem späteren Ablösen von der Innenwand eines Fasskörpers kann dies zu Verstopfungen oder Beschädigungen von Förderpumpen und zu erheblichen Beeinträchtigungen von Weiterverarbeitungsprozessen des Füllgutes führen.
Wenn sich derartige Verkokungs-Partikel im Bereich der Schweißnaht eines blasgeformten Behälters befinden, führt dies zu einer sehr nachteiligen und unzulässigen Schwächung des Behälters.
Weiterhin können derartige Ablagerungen zur Bildung von Längsstreifen und somit zu optischer und/oder technischer Beeinträchtigung des extrudierten und danach blasgeformten Produktes führen.
Dieses Phänomen wird auch als "die built-up" bezeichnet, bei dem die Anlagerungen von thermisch geschädigten Polymeren am Düsenauslauf zu unerwünschten Oberflächenunregelmäßigkeiten führen. Bei kommerziell erhältlichen Kunststoffen sind es in aller Regel einzelne Additive (wie Stabilisatoren oder Fließhilfen) zur Beeinflussung von Wandgleiteffekten, die zu den anhaftenden Ausscheidungen führen bzw. diese verursachen.

### Stand der Technik:

Diese Problematik ist z. B. auch aus dem Bereich der Blasfolienextrusion bekannt. Hierbei werden Ablagerungen mittels mechanischer Reinigungsvorrichtungen wie Schaber oder Abziehklingen abgestreift und in den Abfallbereich gefahren, welcher beim Folienblasen jeweils beim Wechsel der Wicklerspindeln entsteht.
Bei dieser bisher üblichen Reinigung der Extrusionswerkzeuge muss allerdings der Extrusionsprozess gestoppt werden, damit die zumeist manuelle mechanische Reinigung des Düsenkerns direkt unterhalb der Austrittskante der Schmelze vorgenommen werden kann.
Durch das Anhalten des Extrusionsprozesses kommt es einerseits zu einem durch den Stillstand bedingten Produktionsausfall; zum anderen muss die Anlage danach in der Regel von einem versierten Verfahrenstechniker wieder angefahren und in einen stabilen Betriebszustand geführt werden.

Aus der JP08332668 A ist eine ringförmige Extrusionsdüse für diskontinuierliche Extrusion bekannt, die in Bezug auf die vertikale Position von äußerem Düsenring zu innerem Düsenkern sehr exakt einstellbar ist. Ziel ist es hierbei, beim Düsenverschluss nach Ende eines jeden Schlauchausstoßes die unteren Enden von Düse und Kern exakt auf einer gemeinsamen Ebene zueinander zu positionieren, damit insbesondere keine hervorstehenden Kanten und Konturen direkt unterhalb und neben dem unteren Ringkanalende bestehen, an denen sich gegebenenfalls Material während des Schlauchausstoßvorgangs oder beim Öffnen/Schließen des Düsenwerkzeugs ablagern kann. Diese Düsenausführung wird in Kombination mit einem Speicherkopf für die diskontinuierliche Extrusion verwendet. Bei derartigen Extrusionsköpfen kann der gesamte Düsenbereich innen- und außenseitig auf einfache Weise während der Füllphase bei geschlossenem Düsenspalt mit externen Reinigungsvorrichtungen (Bürsten, Schabern oder Ähnlichem) gereinigt werden.
Derartige Düsenausführungen können bei der kontinuierlichen Schlauchextrusion nicht eingesetzt werden, da hier das Düsenwerkzeug niemals ganz geschlossen wird, um einen starken Anstieg des Massedrucks im Bereich Extruder und Schlauchkopf zu vermeiden, der leicht zu Betriebsstörungen oder Schäden im Extrusionskopf und Kunststoffleitungen führen kann.

Die JP05092467 A offenbart eine Längs-Schlitzdüse für die Herstellung von Kunststoff-Folien oder -Platten, bei der die Entfernung von Ablagerungen mittels einem Paar zustellbarer Schaber erfolgt, die längs der linearen Düsenaustrittsöffnung entlang des Düsenwerkzeuges geführt werden. Beide Schieber entfernen dabei Ablagerungen durch Schaben unter direktem mechanischem Kontakt zum Düsenwerkzeug (Metall auf Metall). Bei dem Eingriff der Schaber muss entweder der Extrusionsvorgang gestoppt werden oder es wird eine größere Menge an Ausschussproduktion in Kauf genommen.

Aus der JP2003305761 A ist ein Verfahren bekannt, wonach mittels einer aufwendigen Vorrichtung sich an der Austrittsdüse eines extrudierten Kunststoffstrangs ausbildende gummiartige Anbackungen oder Ablagerungen durch aufgeblasenes Druckgas oder Druckluft abgelöst und entfernt werden sollen, so dass der Kunststoffstrang frei von anhaftenden Verunreinigungen bleibt. Neben der besonderen Druckgas-Anlagenkonstruktion stellt das ständige Aufblasen des Druckgases einen kostenintensiven Betrieb der Kunststoff-Extrusionsvorrichtung dar. Dabei kann jedoch nicht sichergestellt werden, dass abgeblasene Anbackungen oder partikelförmige Ablagerungen nicht doch an dem extrudierten Kunststoffstrang anhaften und diesen verunreinigen. Zudem wird bei diesem bekannten Extrusionsverfahren ein Kunststoff-Vollstrang aus einer kreisrunden Austrittsdüse extrudiert, bei der man sich ausbildende Anbackungen oder Ablagerungen leicht optisch von außen erkennen kann. Hier ist die Austrittsdüse frei von außen zugänglich und die anhaftenden Ablagerungen sind vergleichsweise einfach zu entfernen.

Die US 2008/099940 A1 schließlich offenbart ein Verfahren und eine Vorrichtung, bei der zum Reinigen eines Extrudermundstücks ein dünner Metalldraht quer über die Austrittsfläche des Mundstücks mit einer oder mehrere Extrusionsöffnungen geführt wird, so dass sich der Draht nahe genug oder direkt an der Oberfläche der Austrittsfläche befindet, um störende, an der Austrittsfläche anhaftende Extrudat-Tropfen von der Austrittsfläche zu entfernen. Aus der einen oder Mehrzahl von Extrusionsöffnungen, die sich direkt hinter einem Extruder befinden, können verschiedene Kunststoffarten in horizontaler oder vertikaler Richtung in stangen- oder fadenartiger Form ausgestoßen werden, wonach diese zumeist zu Pellets geschnitten und als kleine Partikel weiterverarbeitet werden. Bei diesem bekannten Reinigungsverfahren kann die Abreinigung der Extrusionsöffnungen mittels des dünnen Metalldrahtes während des Extrusionsvorgangs der Kunststoffstränge vorgenommen werden, allerdings können die abgeschnittenen bzw. abgeschabten Extrudat-Tropfen nicht kontrolliert aufgefangen und abgeführt werden. Ein ungewolltes Anbacken der abgeschabten Extrudat-Tropfen an dem extrudierten Kunststoff kann nicht ausgeschlossen bzw. verhindert werden.

### Aufgabe der Erfindung :

Es ist Aufgabe der vorliegenden Erfindung, die Nachteile des Standes der Technik zu überwinden und ein Verfahren und eine Vorrichtung zur Reinigung des Austrittsbereiches von Extrusionswerkzeugen - insbesondere von Ringdüsen mit Kern - anzugeben, die während des laufenden Betriebes der kontinuierlichen Extrusion ohne Unterbrechung des Produktionsprozess funktionieren. Dabei sollen die Materialablagerungen gezielt abgeführt und aus dem Produktionsprozess ausgeschleust werden.

Diese Aufgabe wird verfahrenstechnisch mit den erfindungsgemäßen Merkmalen des Patentanspruches 1 kennzeichnend derart gelöst, dass der schlauchförmige Vorformling mittels mindestens zweier mechanischer Eingreifmittel in Form von teilkreisförmigen leistenförmigen Druckelementen kurzzeitig umgelenkt und aufgestaucht wird, wobei die Eingreifmittel sich dicht unterhalb der Extrusionsdüse berührungsfrei ohne direkten Kontakt mit der Extrusionsdüse in Radialrichtung bewegen, wobei die außenseitig im Nahbereich des Austrittsspaltes der ringförmigen Extrusionsdüse anhaftenden Ablagerungen von dem schlauchförmigen Vorformling im laufenden Betrieb während der kontinuierlichen Extrusion abgewischt und abtransportiert werden und wobei der schlauchförmige Vorformling während seiner Umlenkung selbst als Reinigungselement wirkt. Der Clou der Erfindung besteht darin, dass der schlauchförmige Vorformling während seiner Umlenkung selbst als Reinigungselement verwendet wird.
Auf diese an sich einfache Weise können Anbackungen, die sich im Laufe des Extrusionsprozesses ausgebildet und im Nahbereich der Austrittsdüse angesetzt haben, während des laufenden Betriebes der kontinuierlichen Extrusion ohne Unterbrechung des Produktionsprozess abgelöst und entfernt werden.
In Ausgestaltung der Erfindung ist vorgesehen, dass die Umlenkung des schlauchförmigen Vorformlings zur Abreinigung der Extrusionsdüse in vorgebbaren Zeitabständen durchgeführt wird. In vorteilhafter Weise wird nämlich die Umlenkung des schlauchförmigen Vorformlings zur Abreinigung der Extrusionsdüse gerade dann durchgeführt, wenn das Schlauchstück aus der Extrusionsdüse ausgestoßen wird, welches nachfolgend als Butzenstück von dem fertig geblasenen Hohlkörper als Abfallstück abgetrennt wird.

Um die Materialablagerung gezielt abführen und aus dem Produktionsprozess ausschleusen zu können, werden nach dem Umlenken des schlauchförmigen Vorformlings diejenigen Schlauchstücke, an welchen die abgereinigten Anhaftungen festsitzen, aus dem weiteren Produktionsprozess aussortiert.

In bevorzugter Ausgestaltung der Erfindung erfolgt das Umlenken des schlauchförmigen Vorformlings mittels teilkreisförmiger Druckelemente, die den Vorformling direkt unterhalb der Austrittsdüse von außen um nahezu 360° umschließen und nach innen umlenken.

Die erfindungsgemäße Vorrichtung zur Abreinigung von Extrusionsköpfen bei der Extrusion von thermoplastischen Kunststoffen, die aus einer Extrusionsdüse ausgestoßen werden, zeichnet sich zur Lösung der zugrunde liegenden Aufgabenstellung dadurch aus, dass direkt unterhalb der Extrusionsdüse mechanische Eingreifmittel vorgesehen sind, die mit einem entsprechenden Antrieb derart ausgestattet sind, dass die Eingreifmittel in Wirkkontakt mit dem extrudierten schlauchförmigen Vorformling bringbar sind. Die mechanischen Eingreifmittel umfassen mindestens zwei Kreissegment-Elemente, die durch Aktuatoren in Radialrichtung zugestellt d. h. bewegt werden können und dann in der eingefahrenen Position einen weitestgehend geschlossenen Kreisring bilden. Die Aktuatoren können auf verschiedenste Art betätigt werden und dazu mit einem z. B. elektro-pneumatischen, elektro-hydraulischen oder elektrischen Antrieb versehen sein.

### Funktionsweise :

Die zugefahrenen, einen Kreisring bildenden Kreissegment-Elemente stauchen den austretenden Schmelzeschlauch radial für eine einstellbare Zeit zusammen. Der gestauchte Schmelzschlauch fließt für die eingestellte Zeitdauer nach innen über die Kante des Kernes und reißt so das in diesem Bereich abgelagerte Material gezielt mit. Der Zeitpunkt des Einfahrens der Kreissegmente sowie die Haltezeit im eingefahrenen Zustand sind frei wählbar und einstellbar.
Die Reinigungs-Zeiten werden vorzugsweise so eingestellt, dass die ringförmigen Ablagerungen, welche insgesamt rundum abgelöst werden, sich im Butzenbereich des nachfolgend hergestellten Behälters befinden.
Dabei wird der austretende Schmelzschlauch selbst als Reinigungsmedium eingesetzt. Es kommt zu keiner mechanischen Berührung zwischen den Eingreifmitteln, den Aktuatoren oder den Kreissegmenten und dem Düsenwerkzeug.
Dadurch erfolgt eine schonende Reinigung des innen liegenden Düsenkernes ohne direkten Eingriff von kratzenden, schabenden oder schneidenden mechanischen Hilfsmitteln. Durch die besondere Art der Düsenreinigung ist eine Beschädigung der präzise gefertigten Fließkanalgeometrien im Düsenbereich ausgeschlossen.

Die Kreissegment-Elemente bewegen sich berührungsfrei unterhalb der Extrusionsdüse. In zweckmäßiger Weise sind die Eingriffsmittel in Höhen- oder/und Tiefenrichtung (Radialrichtung) verstellbar ausgebildet, um an den austretenden Schlauch angepasst werden zu können.
Bei der Düsenreinigung kommt es durch das kurzzeitige Stauchen des Schlauches gegen den Düsenkern aufgrund des kontinuierlichen Schmelzeaustritts gleichzeitig zu einem Aufschwellen des Schlauches in Umfangrichtung (nach außen) zwischen Düsenaustrittskante und eingefahrenen Kreissegmenten. Der auch nach außen aufschwellende Schmelzeschlauch reißt dadurch auch die an der außenseitigen Düsenaustrittskante anhaftenden ringförmigen Ablagerungen mit.

Verfahrenstechnisch ist der Reinigungszyklus (z. B. alle 2 Stunden, alle x-Zyklen) mit Reinigungswiederholungen (1x oder mehrfach hintereinander) frei einstellbar, je nach Ablagerungsneigung des zu verarbeitenden Rohstoffes und Wachstum der Anbackungen. Kontaminierte Schlauchabschnitte oder kontaminierte Butzenabfälle werden ganz gezielt separiert und ausgeschleust. Dadurch wird eine Verunreinigung des Rohstoffkreislaufs (Regranulat) mit Verkokungsablagerungen enthaltendem Material verhindert.
Falls Butzenbereiche für eine vollständige Abreinigung zu kurz sind (z. B. bei zu hoher Schlauchaustrittsgeschwindigkeit), kann z. B. auch der nachfolgende Artikel ausgeschleust und entsorgt werden (nur ein Ausschussprodukt).

Das erfindungsgemäße Verfahren und die dafür konzipierte Vorrichtung sind in vorteilhafter Weise grundsätzlich für alle Extrusionsblasformmaschinen mit kontinuierlichem Schmelzeaustritt nachrüstbar. Prinzipiell ist das Verfahren und die entsprechende Vorrichtung natürlich auch an Akkukopfmaschinen mit diskontinuierlichem Schmelzeaustritt nachrüstbar.

Die Anwendbarkeit des Verfahrens und der besonderen Vorrichtung ist vielseitig und mit den verschiedensten Extrusionskopfausführungen kombinierbar, so z. B. mit fester Düse/Kern-Ausführung (ohne axiale Wanddickeneinstellung), mit konventioneller Düse/Kern-Ausführung (nur axiale Wanddickensteuerung) oder mit voll einstellbaren Wanddicken des extrudierten schlauchförmigen Vorformlings mit Düse und/oder Kern mit statisch und/oder dynamisch flexibel einstellbaren Durchmessergeometrien (axiale und radiale Wanddickenverstellung = PWDS).

Die Erfindung wird nachfolgend anhand von in den Zeichnungen schematisch dargestellten Ausführungsbeispielen näher erläutert und beschrieben. Es zeigen:
- Figur 1: in Querschnittsdarstellung einen erfindungsgemäßen Extrusionskopf mit Detailzeichnung in Wirkposition "Auf",
- Figur 2: in Querschnittsdarstellung einen erfindungsgemäßen Extrusionskopf mit Detailzeichnung in Wirkposition "Zu",
- Figur 3: in Draufsicht von unten einen erfindungsgemäßen Extrusionskopf mit zwei Kreissegment-Eingreifmitteln in Wirkposition "Auf",
- Figur 4: in Draufsicht von unten einen erfindungsgemäßen Extrusionskopf mit zwei Kreissegment-Eingreifmitteln in Wirkposition "Zu",
- Figur 5: in Draufsicht von unten einen erfindungsgemäßen Extrusionskopf mit vier Kreissegment-Eingreifmitteln in Wirkposition "Auf",
- Figur 6: in Draufsicht von unten einen erfindungsgemäßen Extrusionskopf mit vier Kreissegment-Eingreifmitteln in Wirkposition "Zu",
- Figur 7: in Seitenansicht ein blasgeformtes Spundfass mit zwei Butzenstücken

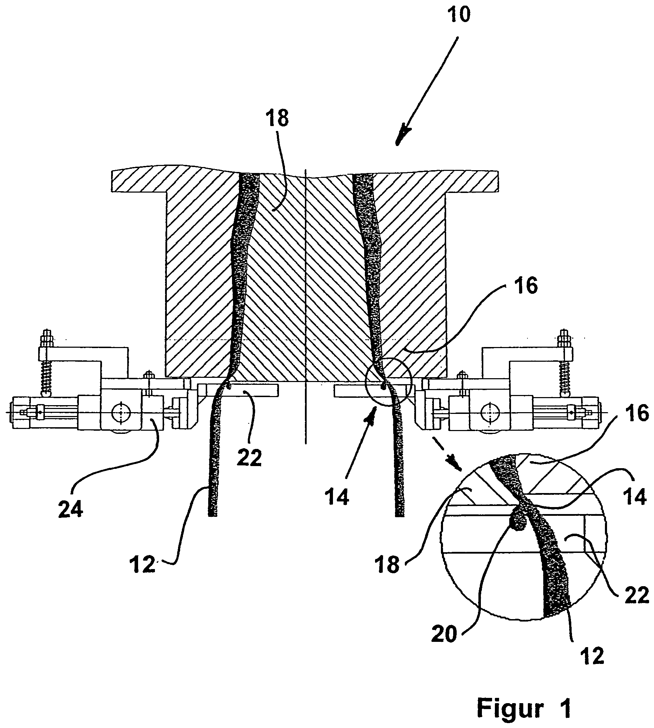

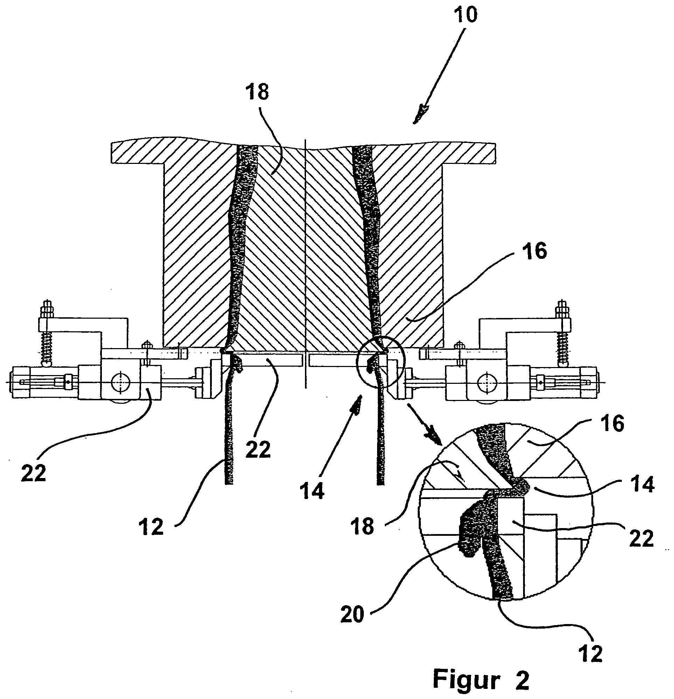

In Figur 1 ist mit der Bezugsziffer 10 ein erfindungsgemäßer Extrusionskopf bezeichnet, bei dem ein schlauchförmiger Vorformling 12 aus erhitztem thermoplastischem Kunststoff aus einer Austrittsdüse 14 ausgestoßen wird. Die Austrittsdüse 14 wird außenseitig von einem Gehäusering 16 und innenseitig durch Kern 18 definiert. Der Kern 18 ist axial verstellbar ausgebildet, um die Wandstärke des ausgestoßenen Vorformlings 12 aus schmelzflüssigem Kunststoff (z. B. HD-PE), während des Extrusionsvorganges je nach Erfordernis des zu erblasenen Hohlkörpers verändern bzw. einstellen zu können.
Im Nahbereich der Austrittsdüse 14 bilden sich im Laufe des Extrusionsprozesses am äußeren Rand des innenseitigen Kernes 18 und auch am inneren Rand des äußeren gehäuseseitigen Außenringes 16 ringförmige Anbackungen 20 aus, die - wenn sie zu groß geworden sind - von Zeit zu Zeit unkontrolliert abfallen und dann in nachteiliger Weise das jeweilige Fertigprodukt unbrauchbar machen.
Um diesen nachteiligen Effekt in den Griff zu bekommen und den Vorgang der Beseitigung dieser Anbackungen 20 kontrolliert ablaufen zu lassen, sind bei dem erfindungsgemäßen Extrusionskopf 10 zwei oder mehrere Eingriffsmittel 22 vorgesehen, die jeweils von einem Aktuator 24 betätigbar sind.
Die Eingriffsmittel sind als zangenartiges, leistenförmiges Drückwerkzeug ausgebildet, das direkt unterhalb der Austrittsdüse eines Extrusionskopfes derart angeordnet und mit einem Verschiebeantrieb ausgestattet ist, so dass es in den normalen Verlauf des ausgestoßenen Kunststoffschlauches einschwenkbar ist. Das Drückwerkzeug für eine ringförmige Extrusionsdüse besteht aus wenigstens zwei oder mehr zangenartigen, teilkreisförmigen Drückelementen, die den ausgestoßenen Kunststoffschlauch von außen umschließen und im wesentlichren quer zur Ausstoßrichtung des Kunststoffschlauches verschieben können. Die Drückelemente bzw. Eingriffsmittel 22 sind mit Aktuator 24 dicht unterhalb der Austrittsdüse 14 gehäuseseitig am Außenring 16 der Austrittsdüse oder direkt am Gehäuse des Extrusionskopfes 10 befestigt.
In dem vergrößerten Kreisausschnitt ist die am äußeren Rand des innenseitigen Kernes 18 anhaftende ringförmige Anbackungen 20 deutlich erkennbar. Die Eingriffsmittel 22 stehen hier in Position "Auf" und der schlauchförmige Vorformling 12 fließt dicht an der ringförmigen Anbackungen 20 vorbei.
Im Vergleich dazu sind in Figur 2 die Eingriffsmittel 22 jeweils über ihren Aktuator 24 in Position "Zu" gestellt und in Wirkeingriff mit dem ausgestoßenen schlauchförmigen Vorformling 12 gebracht. Dabei ist erkennbar, dass der schlauchförmige Vorformling 12 kurzzeitig nach innen umgelenkt wird und die am äußeren Rand des innenseitigen Kernes 18 anhaftende ringförmige Anbackung 20 abwischt, so dass diese nun innenseitig am schlauchförmige Vorformling 12 anhaftet (anklebt) und abtransportiert wird. Gleichzeitig wird der schlauchförmige Vorformling 12 oberhalb des Eingriffsmittels 22 aber auch kurzzeitig aufgestaucht und nach außen aufgestaut, so dass dort - am inneren Rand des äußeren gehäuseseitigen Außenringes 16 - ebenfalls anhaftende ringförmige Anbackungen abgedrückt, abgewischt und außenseitig am schlauchförmigen Vorformling 12 angeklebt und abtransportiert werden. Hierbei wird also der schlauchförmige Vorformling 12 während seiner Umlenkung selbst als Reinigungselement verwendet.

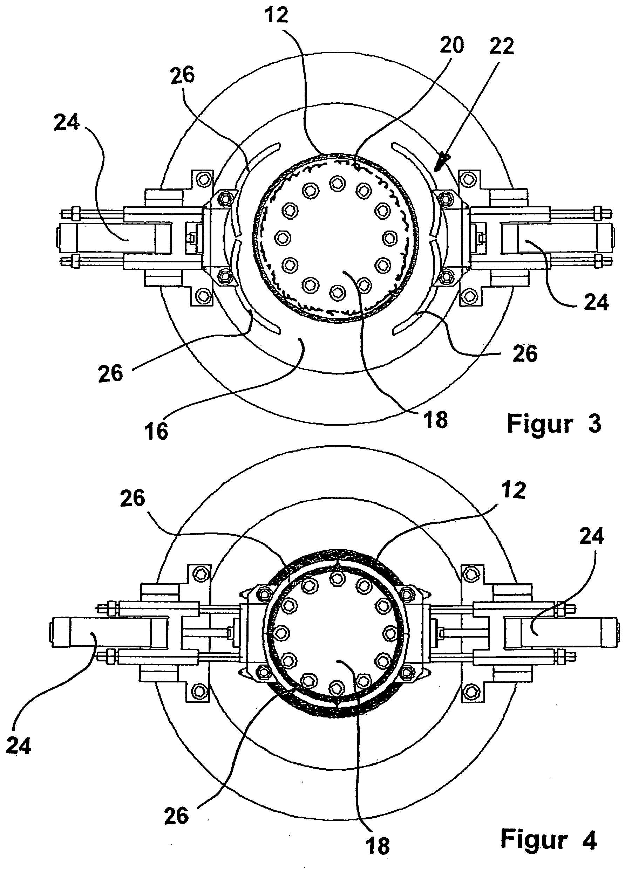

In Figur 3 ist der erfindungsgemäße Extrusionskopf 10 in Draufsicht von unten dargestellt, wobei die beiden Eingriffsmittel 22 mit ihrem jeweiligen Aktuator 24 in Position "Auf" erkennbar sind. Die beiden Eingriffsmittel 22 bestehen in dieser Ausführungsvariante aus jeweils zwei beweglich aufgehängten 90° Kreissegment-Elementen 26, die noch von dem schlauchförmigen Vorformling 12 deutlich beabstandet sind.
Dagegen sind in Figur 4 die Eingriffsmittel 22 wieder jeweils mittels Aktuator 24 in Position "Zu" gefahren und die vier Kreissegment-Elemente 26 in Wirkeingriff mit dem ausgestoßenen schlauchförmigen Vorformling 12 gebracht. Der schlauchförmige Vorformling 12 ist dadurch nach innen umgelenkt und auf die ringförmige Anbackung 20 gedrückt, so dass diese nun innenseitig am schlauchförmige Vorformling 12 anhaften bzw. angeklebt sind und nachfolgend kontrolliert abtransportiert werden.

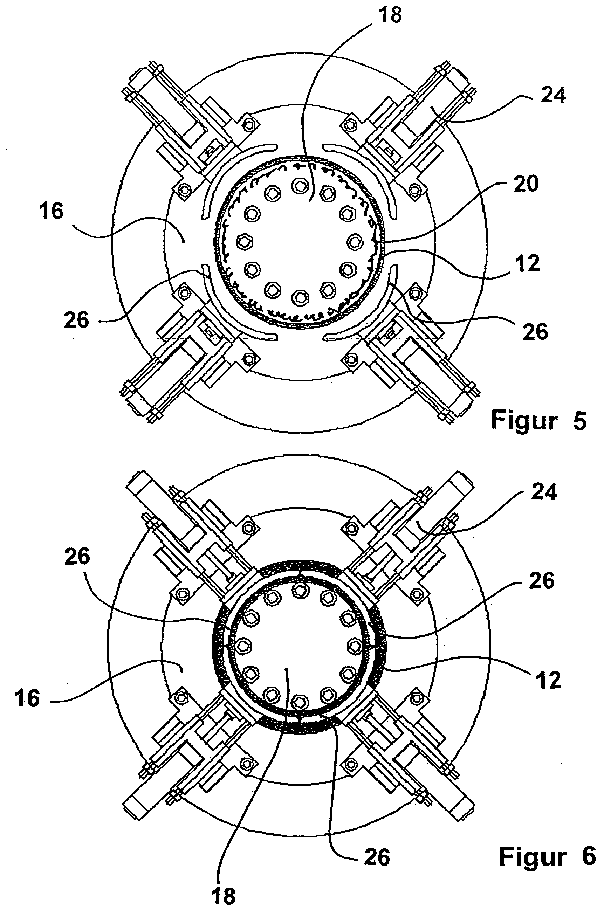

Eine andere Ausführungsform eines erfindungsgemäßen Extrusionskopfes 10 ist - ebenfalls in Draufsicht von unten - in Figur 5 dargestellt, wobei die beiden Eingriffsmittel 22 mit ihren jeweiligen Aktuatoren 24 in Position "Auf" außer Funktion gestellt sind. Hierbei ist jedes der vier 90° Kreissegment-Elemente 26 mit einem eigenen Aktuator 24 ausgestattet. In Figur 6 sind die die Eingriffsmittel 22 wieder in Position "Zu" gefahren und die vier Kreissegment-Elemente 26 stehen in Wirkeingriff mit dem Vorformling 12. Dabei wird der schlauchförmige Vorfomling von außen vollständig umschossen, wobei die vier 90° Kreissegment-Elemente 26 in der eingefahrenen Position einen weitestgehend geschlossenen Kreisring bilden. Erfindungsgemäß wird dabei der ausgestoßene Kunststoffschlauch als "Putzmittel" verwendet. Dabei wird der Schlauch während des Ausstoßvorganges kurzzeitig mittels entsprechender Eingriffsmittel bzw. Eingreifvorrichtung seitlich gedrückt und verschoben, so dass die Anbackungen "abgewischt" werden und an dem Kunststoffschlauch "ankleben". Die Aktuatoren 24 können mit einem elektropneumatischen, elektro-hydraulischen oder elektrischen Antrieb versehen sein.

Die Eingreifmittel sind zweckmäßigerweise in Höhen- oder/und Tiefenrichtung (= Radialrichtung) verstellbar ausgebildet, um an die besonderen Gegebenheiten des austretenden Schlauchs und die beabsichtigte Umlenkung mit entsprechender Aufstauchung angepasst werden zu können.

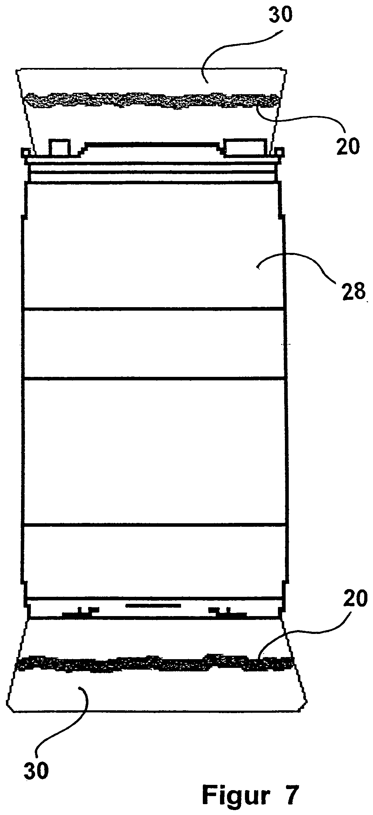

In Figur 7 ist als Beispiel für ein blasgeformtes Produkt ein Kunststoff-Spundfass 28 dargestellt, das soeben aus der Blasform entnommen wurde, wobei an dem oberen und unteren Fassrand noch die abgequetschten Abfallstücke, die sogenannten Butzenstücke 30 hängen.
Gemäß der erfindungsgemäßen Verfahrensweise sind die Anbackungen 20 von der Austrittsdüse genau in diese Bereiche der Abfallstücke gefahren worden, so dass in der Regel kein Produktausfall durch diese eingebundenen Verkokungsrückstände entsteht.

Mit dieser Erfindung wird die technische Lehre vermittelt, wie verfahrens- und vorrichtungsmäßig auf vergleichsweise einfache und kostengünstige Weise mit geringem konstruktiven Mittelaufwand der Austrittsbereich von Extrusionswerkzeugen während des laufenden Betriebes der kontinuierlichen Extrusion ohne Unterbrechung des Produktionsprozess automatisch gereinigt werden kann. Dabei werden die produktverunreinigenden Materialablagerungen gezielt abgeführt und aus dem Produktionsprozess ausgeschleust.

### Bezugsziffernliste

- 10: Extrusionskopf
- 12: schlauchförmiger Vorformling
- 14: Austrittsdüse
- 16: Gehäusering 16
- 18: Kern
- 20: Anbackungen
- 22: Eingriffsmittel
- 24: Aktuator
- 26: Kreissegment-Elemente
- 28: Kunststoff-Spundfass
- 30: Butzenstücke

## Patentansprüche

1. Verfahren zur Abreinigung von Extrusionsköpfen (10) bei der Extrusion von thermoplastischen Kunststoffen, die als schlauchförmiger Vorformling (12) aus einer Austrittsdüse (14) ausgestoßen bzw. extrudiert werden,
**dadurch gekennzeichnet, dass**
der schlauchförmige Vorformling (12) mittels mindestens zweier mechanischer Eingriffsmittel (22) in Form von teilkreisförmigen leistenförmigen Druckelementen kurzzeitig umgelenkt und aufgestaucht wird, wobei die Eingriffsmittel (22) sich dicht unterhalb der Austrittsdüse (14) berührungsfrei ohne direkten Kontakt mit der Austrittsdüse (14) in Radialrichtung bewegen, wobei die außenseitig im Nahbereich des Austrittsspaltes der ringförmigen Austrittsdüse (14) anhaftenden Ablagerungen von dem schlauchförmigen Vorformling (12) im laufenden Betrieb während des kontinuierlichen Schmelzeaustritts abgewischt und abtransportiert werden und wobei der schlauchförmige Vorformling (12) während seiner Umlenkung selbst als Reinigungselement wirkt.

2. Verfahren nach Anspruch 1,
**dadurch gekennzeichnet, dass**
die Umlenkung des schlauchförmigen Vorformlings (12) zur Abreinigung der Austrittsdüse (14) in vorgebbaren Zeitabständen durchgeführt wird.

3. Verfahren nach Anspruch 1 oder 2,
**dadurch gekennzeichnet, dass**
die Umlenkung des schlauchförmigen Vorformlings (12) zur Abreinigung der Austrittsdüse (14) gerade dann durchgeführt wird, wenn das Schlauchstück aus der Austrittsdüse (14) ausgestoßen wird, welches nachfolgend als Butzenstück von dem fertig geblasenen Hohlkörper als Abfallstück abgetrennt wird.

4. Verfahren nach Anspruch 1, 2 oder 3 ,
**dadurch gekennzeichnet, dass**
nach dem Umlenken des schlauchförmigen Vorformlings (12) dasjenige Schlauchstück, an welchem die abgereinigten Anhaftungen festsitzen, aus dem weiteren Produktionsprozess aussortiert wird.

5. Verfahren nach Anspruch 1, 2, 3 oder 4,
**dadurch gekennzeichnet, dass**
das Umlenken des schlauchförmigen Vorformlings (12) mittels teilkreisförmiger Druckelemente erfolgt, die den Vorformling (12) direkt unterhalb der Austrittsdüse (14) von außen um nahezu 360° umschließen und nach innen umlenken.

6. Extrusionskopf (10) zur Extrusion von thermoplastischen Kunststoffen aus einer Austrittsdüse (14) mit einer Vorrichtung zur Abreinigung des Extrusionskopfes (10),
**dadurch gekennzeichnet, dass**
direkt unterhalb der Austrittsdüse (14) mindestens zwei mechanische Eingriffsmittel (22) in Form von teilkreisförmigen leistenförmigen Drückelementen vorgesehen sind, die mit einem durch einen Verschiebeantrieb angetriebenen Aktuator (24) derart ausgestattet sind, dass die Eingriffsmittel (22) berührungsfrei ohne direkten Kontakt mit der Austrittsdüse (14) unterhalb der Austrittsdüse (14) bewegbar und in Wirkkontakt mit dem extrudierten schlauchförmigen Vorformling (12) bringbar sind, wobei dieser kurzzeitig umgelenkt und aufgestaucht und somit selbst für die Abreinigung der Austrittsdüse (14) im laufenden Betrieb während des kontinuierlichen Schmelzeaustritts verwendet wird.

7. Extrusionskopf nach Anspruch 6,
**dadurch gekennzeichnet, dass**
die mechanischen Eingriffsmittel (22) zwei oder mehr Kreissegment-Elemente (26) umfassen, die durch Aktuatoren (24) in Radialrichtung bewegbar ausgebildet sind.

8. Extrusionskopf nach Anspruch 6 oder 7,
**dadurch gekennzeichnet, dass**
die Kreissegment-Elemente (26) den extrudierten Vorformling (12) von außen um nahezu 360° umschließen und in der eingefahrenen Position einen weitestgehend geschlossenen Kreisring bilden.

9. Extrusionskopf nach einem der vorhergehenden Ansprüche 6 bis 8,
**dadurch gekennzeichnet, dass**
die Aktuatoren (24) mit einem. elektro-pneumatischen, elektro-hydraulischen oder elektrischen Antrieb versehen sind.

10. Extrusionskopf (10) nach einem der vorhergehenden Ansprüche 6 bis 9,
**dadurch gekennzeichnet, dass**
die Eingriffsmittel (22) in Höhen- oder/und Tiefenrichtung (Radialrichtung) verstellbar ausgebildet sind.

## Claims

1. Method for cleaning off extrusion heads (10) in the extrusion of thermoplastics which are ejected or extruded, in the form of a tubular parison (12), from an outlet nozzle (14),
**characterized in that**
the tubular parison (12) is briefly deflected and compressed by means of at least two mechanical engagement means (22) in the form of partially circular strip-like pressure-exerting elements, wherein the engagement means (22) move in the radial direction close beneath the outlet nozzle (14) without touching the outlet nozzle (14), or with no direct contact therewith, wherein the deposits adhering to the outside in the vicinity of the outlet gap of the annular outlet nozzle (14) are wiped off and transported away by the tubular parison (12) during ongoing operation with continuous melt delivery, and wherein the tubular parison (12) itself acts as a cleaning element while it is being deflected.

2. Method according to Claim 1,
**characterized in that**
the operation of deflecting the tubular parison (12) for cleaning off the outlet nozzle (14) is performed at predeterminable time intervals.

3. Method according to Claim 1 or 2,
**characterized in that**
the operation of deflecting the tubular parison (12) for cleaning off the outlet nozzle (14) is performed precisely when the tubular piece is ejected from the outlet nozzle (14), said tubular piece then being detached, in the form of a waste slug piece, from the definitively blow-moulded hollow body.

4. Method according to Claim 1, 2 or 3,
**characterized in that**,
following deflection of the tubular parison (12), that tubular piece to which the cleaned-off residues are attached is separated out from the rest of the production process.

5. Method according to Claim 1, 2, 3 or 4,
**characterized in that**
the tubular parison (12) is deflected by means of partially circular pressure-exerting elements which surround the parison (12) externally, over more or less 360°, directly beneath the outlet nozzle (14) and deflect it inwards.

6. Extrusion head (10) for extruding thermoplastics from an outlet nozzle (14), having a device for cleaning off the extrusion head (10),
**characterized in that**
at least two mechanical engagement means (22) in the form of partially circular strip-like pressure-exerting elements are provided directly beneath the outlet nozzle (14) and are equipped with an actuator (24), which is driven by a displacement drive, such that the engagement means (22) can be moved beneath the outlet nozzle (14) without touching the outlet nozzle (14), or with no direct contact therewith, and can be brought into operative contact with the extruded tubular parison (12), wherein the latter is briefly deflected and compressed and is therefore itself used for cleaning off the outlet nozzle (14) during ongoing operation with continuous melt delivery.

7. Extrusion head according to Claim 6,
**characterized in that**
the mechanical engagement means (22) comprise two or more circle-segment elements (26), which are designed such that they can be moved in the radial direction by actuators (24).

8. Extrusion head according to Claim 6 or 7,
**characterized in that**
the circle-segment elements (26) surround the extruded parison (12) externally, over more or less 360°, and in the retracted position form a for the most part closed circular ring.

9. Extrusion head according to one of the preceding Claims 6 to 8,
**characterized in that**
the actuators (24) are provided with an electropneumatic, electrohydraulic or electric drive.

10. Extrusion head (10) according to one of preceding Claims 6 to 9,
**characterized in that**
the engagement means (22) are designed such that they can be adjusted in the height direction and/or depth direction (radial direction).

## Revendications

1. Procédé de nettoyage de têtes d'extrusion (10) lors de l'extrusion de matières de synthèse thermoplastiques qui sont éjectées ou extrudées en tant que préforme (12) en forme de tuyau souple par une buse de sortie (14),
**caractérisé en ce que**
la préforme (12) en forme de tuyau souple est brièvement déviée et refoulée par au moins deux moyens d'engagement (22) mécaniques sous forme d'éléments de pression qui se présentent sous la forme d'une barre partiellement circulaire, les moyens d'engagement (22) se déplaçant sans toucher et sans contact direct avec la buse de sortie (14) dans une direction radiale juste sous la buse de sortie (14), les dépôts de la préforme (12) en forme de tuyau souple, qui adhérent du côté extérieur à proximité de la fente de sortie de la buse de sortie (14) annulaire, étant essuyés et évacués en fonctionnement normal pendant la sortie continue de la masse fondue, et la préforme (12) en forme de tuyau souple agissant elle-même en tant qu'élément nettoyant lors de sa déviation.

2. Procédé selon la revendication 1,
**caractérisé en ce que**
la déviation de la préforme (12) en forme de tuyau souple, destinée à nettoyer la buse de sortie (14), est effectuée selon des intervalles de temps réglables au préalable.

3. Procédé selon la revendication 1 ou 2,
**caractérisé en ce que**
la déviation de la préforme (12) en forme de tuyau souple, destinée à nettoyer la buse de sortie (14) est effectuée précisément lorsque le tronçon de tuyau est éjecté de la buse de sortie (14), qui est ensuite séparé sous la forme d'une pièce de bouchon du corps creux soufflé fini en tant que déchet.

4. Procédé selon la revendication 1, 2 ou 3,
**caractérisé en ce que**,
après la déviation de la préforme (12) en forme de tuyau souple, le tronçon de tuyau sur lequel les adhérences nettoyées sont solidement fixées est exclu de la suite du processus de production.

5. Procédé selon la revendication 1, 2, 3 ou 4,
**caractérisé en ce que**,
la déviation de la préforme (12) en forme de tuyau souple est effectuée au moyen d'éléments de pression partiellement circulaires qui entourent la préforme (12) immédiatement sous la buse de sortie (14) par l'extérieur et sur presque 360°, puis la dévient vers l'intérieur.

6. Tête d'extrusion (10) utilisée pour extruder des matières de synthèse thermoplastiques par une buse de sortie (14) dotée d'un dispositif de nettoyage de la tête d'extrusion (10),
**caractérisée en ce que**
au moins deux moyens d'engagement (22) mécaniques sous forme d'éléments de pression qui se présentent sous la forme d'une barre partiellement circulaire, sont prévus immédiatement sous la buse de sortie (14), lesquels sont équipés d'un actionneur (24) commandé par un entraînement de translation de telle sorte que les moyens d'engagement (22) puissent être amenés sous la buse de sortie (14) sans toucher et sans contact direct avec la buse de sortie (14), mais qu'ils puissent être mis en contact actif avec la préforme (12) extrudée en forme de tuyau souple, cette dernière étant ainsi brièvement déviée et refoulée et étant ainsi utilisée pour nettoyer la buse de sortie (14) pendant la sortie continue de la masse fondue en fonctionnement normal.

7. Tête d'extrusion selon la revendication 6,
**caractérisée en ce que**
les moyens d'engagement (22) mécaniques comprennent deux ou plusieurs éléments (26) en forme de segments de cercle qui sont réalisés de manière à être mobiles dans la direction radiale par des actionneurs (24).

8. Tête d'extrusion selon la revendication 6 ou 7,
**caractérisée en ce que**
les éléments (26) en forme de segments de cercle entourent la préforme (12) extrudée par l'extérieur sur presque 360° et forment un anneau circulaire largement fermé lorsqu'ils sont en position engagée.

9. Tête d'extrusion selon l'une quelconque des revendications précédentes 6 à 8,
**caractérisée en ce que**
les actionneurs (24) sont pourvus d'un mécanisme de commande électropneumatique, électrohydraulique ou électrique.

10. Tête d'extrusion selon l'une quelconque des revendications précédentes 6 à 9,
**caractérisée en ce que**
les moyens d'engagement (22) sont réglables en direction de la hauteur et/ou de la profondeur (direction radiale).
